# EUROPÄISCHE PATENTSCHRIFT

(11) **EP 2 286 652 B1**
(45) Veröffentlichungstag und Bekanntmachung des Hinweises auf die Patenterteilung: **13.11.2013**
(21) Anmeldenummer: 10401122.6
(22) Anmeldetag: 22.07.2010
(51) Int. Cl.: A01C 17/00, E01C 19/20, E01H 10/00

(54) **Zweischeibenstreuer**
Two-disk spreader
Epandeur à double disque

(30) Priorität: 07.08.2009 DE 102009026344
(43) Veröffentlichungstag der Anmeldung: 23.02.2011
(73) Patentinhaber: Amazonen-Werke H. Dreyer GmbH & Co. KG, 49205 Hasbergen (DE)
(72) Erfinder: Johannaber, Stefan Jan, 49536 Lienen (DE); Krabbe, Ulrich, 49205 Hasbergen (DE); Wiebusch, Thorsten, 49205 Hasbergen (DE); Bäumker, Herbert, 49176 Hilter (DE)

(56) Entgegenhaltungen:
- EP-A1- 0 410 312
- EP-A1- 1 707 042
- EP-A2- 0 392 288
- DE-A1- 19 513 423
- DE-A1-102007 045 905

## Beschreibung

Die Erfindung betrifft einen Zweischeibenstreuer gemäß des Oberbegriffes des Patentanspruches 1.

Ein derartiger Zweischeibenstreuer ist beispielsweise durch die EP 1 707 042 A1 bekannt geworden. Dieser Zweischeibenstreuer weist Dosiereinrichtungen zum Dosieren des Materials aus dem Vorratsbehälter auf. Das dosierte Material wird unterhalb der Dosiereinrichtung angeordneten rotierend umlaufenden und mit Wurfschaufeln besetzten Verteilerscheiben zugeführt. Die Dosiereinrichtung besteht jeweils aus einer Dosieröffnung und einem Dosierschieber zur Einstellung des gewünschten Massenstromes. Die Dosieröffnung ist in Verbindung mit dem Dosierschieber so ausgestaltet, dass bei Öffnungsbeginn zur Einstellung von kleinen Massenströmen zwei entfernt voneinander liegende Dosierbereiche der Dosieröffnung freigegeben werden. Durch diese auseinander liegenden zwei oder mehr Dosieröffnungen wird eine Aufspreizung der sog. Streubildniere, die durch das Abwerfen des Düngers auf dem Acker entsteht, erreicht. Hierdurch lässt sich auch bei kleinen Mengen eine gleichmäßige Düngerverteilung über eine relativ große Arbeitsbreite erreichen. Bei der Einstellung von größeren Ausbringmengen, d.h. größere Massenströme durch weiteres Öffnen der Dosieröffnung durch den Dosierschieber zeigt sich jedoch bei den bekannten Öffnungen ein sog. Mengeneffekt, d.h., dass bei größeren Streumengen bzw. Massenströmen sich eine negativ auswirkende Ungleichmäßigkeit im Streubild ergibt.

Mit dem Mengeneffekt bezeichnet man negative Veränderungen in Bezug auf Querverteilung und Variationskoefizient allein durch das Vergrößern der ausgebrachten Düngermenge bei sonst gleichen Einstellungen. Eine erste Auswirkung entsteht beispielsweise durch eine Überfüllung der Wurfschaufel bei steigenden Volumenströmen und dem umgekapselten Abschneiden des Düngerstrahls. Ein weiterer negativer Aspekt ist die sich ändernde Streunierenform bei zunehmenden Mengen. Weil sich größere Düngerpakete bereits auf der Schaufel stärker auseinanderdrücken und die einzelnen Partikel stärker untereinander behindern, kommt ein größerer Streuringsektor zustande als es bei kleineren Massenströmen der Fall ist. Auch das Rumziehen der Düngerportionen in Fahrtrichtung wird zunehmend verstärkt.

Der Erfindung liegt die Aufgabe zugrunde, einen Zweischeibenstreuer zu schaffen, bei dem der Mengeneffekt in einfacher Weise erheblich minimiert ist.

Diese Aufgabe wird erfindungsgemäß dadurch gelöst, dass die Kontur des Dosierschiebers derart gestaltet ist, dass bei kleinen Massenstrom mit einer Öffnungsfläche bis zu 10 % bis zu 25%, vorzugsweise etwa 18,5 % der Dosieröffnung die gesamte in Drehrichtung der Wurfflügel sich erstreckende Breite der Dosieröffnung von dem Dosierschieber freigegeben wird und ab einer Öffnungsfläche von mindestens 10 % bis zu 25%, vorzugsweise etwa 18,5 % der Dosieröffnung zumindest ein Teilbereich der Dosieröffnung im Bereich dessen Öffnungsbeginnes durch den Dosierschieber wieder verschlossen wird. Infolge dieser Maßnahme wird bei größer werdender Menge ab dem festgelegten freigegebenen Öffnungsquerschnitt, der den Massenstrom bestimmt, der Anfangsbereich der Dosieröffnung durch den Dosierschieber in Teilbereichen wieder verschlossen. Hierdurch kann bei fast allen möglichen streubaren Mengen ohne Veränderung sonstiger Einstellparameter der jeweilige Dünger für eine feststehende Arbeitsbreite mit gleichmäßiger Düngerverteilung ausgebracht werden. Hierdurch ist der Mengeneffekt erheblich minimiert und tritt in der Praxis in nicht mehr bedeutsamer Weise auf.

Zur Verhinderung des Mengeneffektes ist vorgesehen, dass der im Öffnungsbeginn der Dosieröffnung verschlossene Teilbereich in dem der Drehrichtung der Wurfflügel abgewandten Bereich der Dosieröffnung liegt.

Besonders gute Ergebnisse für die Eliminierung des Mengeneffektes wird dadurch erreicht, dass die wieder verschlossen Breite der Dosieröffnung mindestens ein Viertel bis ein Drittel der jeweiligen Breite der Dosieröffnung beträgt.

Ein einfaches Wiederverschließen der Dosieröffnung im Anfangsbereich in Teilbereichen lässt sich dadurch erreichen, dass der die Dosieröffnung wieder verschließende Teil des Dosierschiebers plattenförmig ausgebildet und Teil des Dosierschiebers ist.

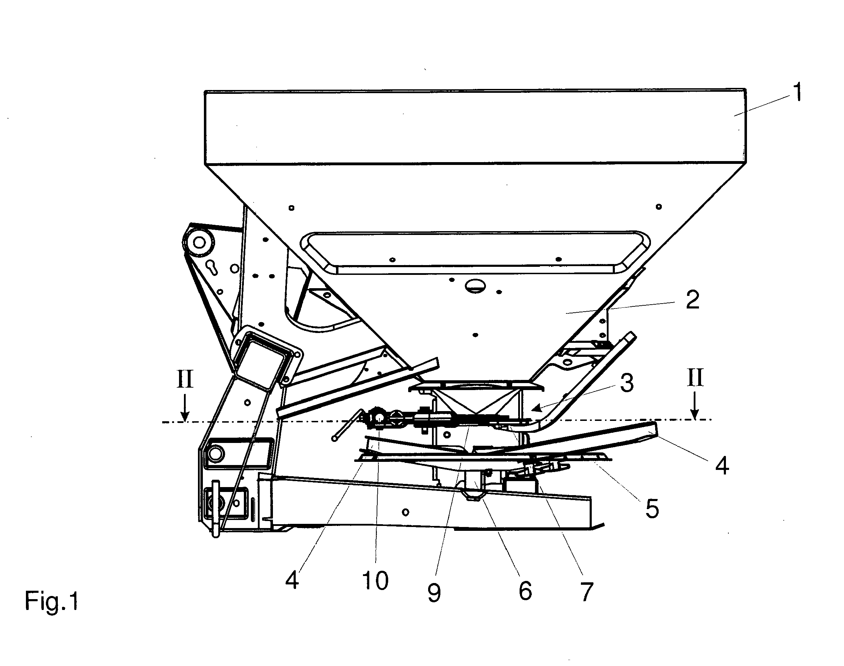

Weitere Einzelheiten der Erfindung sind der Beispielsbeschreibung und den Zeichnungen zu entnehmen. Hierbei zeigen
- Fig. 1: den Schleuderstreuer in der Ansicht von hinten und in Prinzipdarstellung,
- Fig. 2: die aus Dosieröffnung und Dosierschieber bestehende Dosiereinrichtung für die in Fahrtrichtung gesehen linke Schleuderscheibe des Zweischeibenstreuers, wobei die Dosieröffnung durch den Dosierschieber verschlossen ist, in der Ansicht II - II,
- Fig. 3: die Einstellung eines kleinen freigegebenen Querschnittes der Dosieröffnung, wobei durch den Dosierschieber zwei Teilbereiche im Anfangsbereich der Dosieröffnung freigegeben sind, in der Ansicht II - II,
- Fig.4: ein weitere Einstellung der Dosieröffnung, wobei eine mittlere Ausbringmenge eingestellt ist und der der Schleuderscheibe zugewandte Anfangsbereich durch den Dosierschieber wieder verschlossen ist, in der Ansicht II - II,
- Fig. 5: die größtmögliche Einstellung der Dosieröffnung, mit dem einen weiteren wiederverschlossenen Bereich des Anfangsbereiches der Dosieröffnung in der Ansicht II - II,

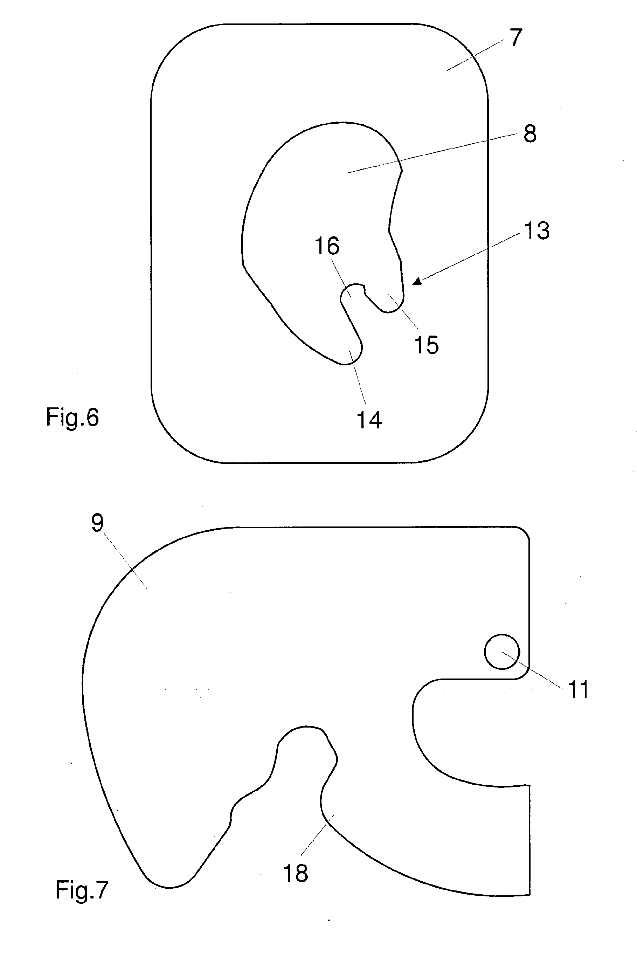

- Fig. 6: die Dosierplatte mit Dosieröffnung ohne Dosierschieber in der Ansicht II - II und
- Fig. 7: den Dosierschieber in der Ansicht II - II.

Der Zweischeibenstreuer zur Ausbringung von Streugut, insbesondere Mineraldünger in der Landwirtschaft weist den Vorratsbehälter 1 auf, der zwei sich trichterförmig nach unten verjüngende Auslauftrichter 2 aufweist. Die Auslauftrichter 2 sind jeweils durch eine Dosiereinrichtung 3 abgeschlossen. Unterhalb der Dosiereinrichtung 3 ist jeweils ein mittels eines motorischen Antriebes rotierend angetriebene und mit Wurfflügeln 4 besetzte Verteilerscheibe 5 auf der Antriebswelle 6 angeordnet. In dem unteren Bereich je des Auslauftrichters 2 oberhalb der Dosiereinrichtung 3 befindet sich eine nicht dargestellte Rühreinrichtung.

Die Dosiereinrichtung 3 weist jeweils eine Dosierplatte 7 mit einer Dosieröffnung 8 und einem zugeordneten Dosierschieber 9 zum Verschließen der Dosieröffnung 8 und zum Einstellen der Öffnungsweite der Dosieröffnung 8 auf. Der Dosierschieber 9 ist mittels einer ihm zuordneten motorischen Stelleinrichtung 10 um die Gelenkachse des Gelenkbolzens 11, mit dem Dosierschieber 9 an der Dosiervorrichtung 3 befestigt ist, in die jeweils gewünschte Position zu verstellen. Die Dosierplatte 7 kann in nicht dargestellter Weise an dem Auslauftrichter 2 in festgesetzter oder in verstellbarer Weise zur Verlagerung der Dosieröffnung 8 gegenüber der Verteilerscheibe 5 und der Antriebswelle 6 der Schleuderscheibe 5 verstellbar angeordnet sein.

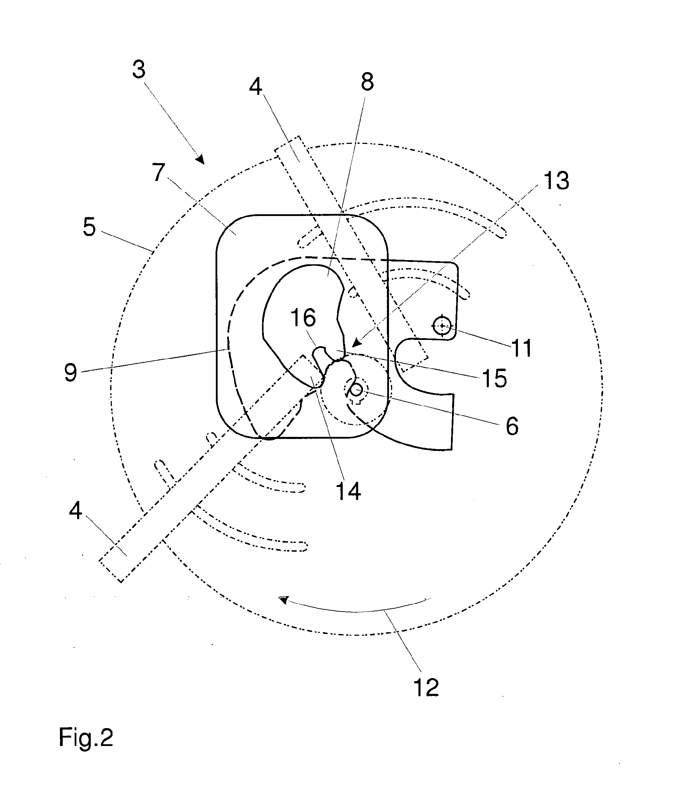

Die Antriebswelle 6 der Schleuderscheibe 5 ist in den Fig. 2 bis 5 durch die kreisförmige Darstellung dargestellt. In Fig. 2 ist die Verteilerscheibe 5 mit den Wurfschaufeln 4 unterhalb der Dosiereinrichtung 3 mit unterbrochenen Strichen dargestellt. In den Fig. 2 bis 5 ist jeweils die Dosiereinrichtung 3, die der in Fahrtrichtung gesehen linken Schleuderscheibe 5 zugeordnet ist, dargestellt. Die Schleuderscheibe 5 wird in Drehrichtung, wie durch den Pfeil 12 gekennzeichnet ist, angetrieben.

Die Dosieröffnung 8 erstreckt sich von der Drehachse 6 der Schleuderscheibe 5 aus gesehen in sich radial nach außen erweiternder Weise. Der Öffnungsbereich 13 der Dosieröffnung 8 befindet sich in dem der Schleuderscheibenachse 6 benachbarten Bereich. Im Öffnungsbereich 13 weist die Dosieröffnung 8 zwei beabstandet zueinander angeordnete Öffnungsabschnitte 14 und 15 auf, welche durch ein von der Schleuderscheibenachse 6 aus gesehen etwa radial sich erstreckenden plattenförmigen Steg 16 der Dosierplatte 7 voneinander getrennt sind. Im Anfangsbereich 13 ist der frei gegebenen Öffnungsbereich der Dosieröffnung 8 also geteilt ausgebildet.

Unterhalb der Dosierplatte 7 ist der vorerwähnte Dosierschieber 9 zur Verschließung der Dosieröffnung 8 und zum Einstellen dessen jeweils gewünschter Öffnungsweite angeordnet.

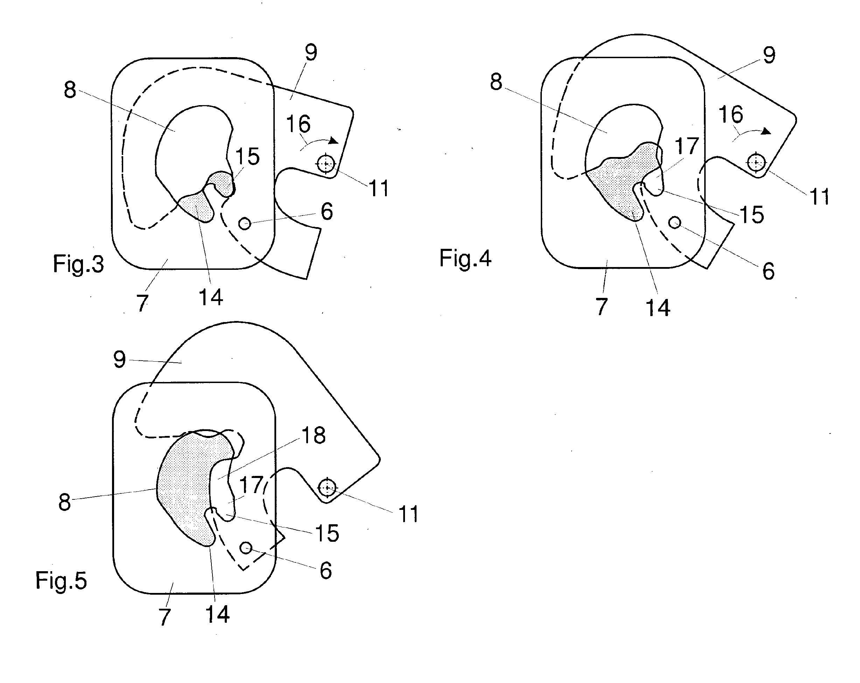

Der Dosierschieber 9 ist im Zusammenwirken mit der Dosieröffnung 8 derart ausgestaltet, dass bei einem kleinen Massenstrom mit einer Öffnungsfläche von bis zu 10% bis zu 25%, vorzugsweise etwa 18,5% der Dosieröffnung 8 die gesamte in Drehrichtung 12 der Wurfflügel 4 sich erstreckende Breite der Dosieröffnung 8 im Öffnungsbereich 13 der Dosieröffnung 8 von dem Dosierschieber 8 freigegeben wird, wie in Fig. 3 durch die schattierten Bereiche dargestellt ist.

Bei einem weiteren Öffnen der Dosieröffnung 8 durch den Dosierschieber 9, in dem der Dosierschieber 9 in Pfeilrichtung 16 verschwenkt wird, wird ab einer Öffnungsfläche von mindestens 10% bis zu 25%, vorzugsweise etwa 18,5% der Dosieröffnung 8 ein Teilbereich 17 der Dosieröffnung 8 im Bereich dessen Öffnungsbeginnes 13 durch den Dosierschieber 9 wieder verschlossen, wie in Fig. 4 dargestellt ist. Hierbei liegt der im Öffnungsbeginn 13 der Dosieröffnung 8 wieder verschlossene Teilbereich 17 in dem der Drehrichtung 12 der Wurfflügel 4 abgewandten Bereich der Dosieröffnung 8, wie in Zusammenschau mit den Fig. 2 und 4 zu erkennen ist. Die wieder verschlossene Breite der Dosieröffnung 8 beträgt mindestens ¼ bis ⅓ der jeweiligen Breite der Dosieröffnung 8, wie die Fig. 4 und 5 zeigen. Der die Dosieröffnung 8 wieder verschließende Teil 18 des Dosierschiebers 9, der en Teilbereich 17 verschließt, ist plattenförmig ausgestaltet und Teil des Dosierschiebers 9. Der jeweils geöffnete Bereich der Dosieröffnung 8 ist jeweils schattiert dargestellt.

Bei einem weiteren Öffnen der Dosieröffnung 8 durch den Dosierschieber 9 aus der in Fig. 4 dargestellten Position in die in Fig. 5 dargestellte maximale Öffnungsweite wird der den Wurfschaufe10 4 in Drehrichtung 12 abgewandte Teilbereich 17 der Dosieröffnung 8 wieder verschlossen, wie Fig. 5 zeigt.

Durch das teilweise wiederverschließen der Dosieröffnung 8 in dem der Wurfschaufel 4 abgewandten Bereich wird bei größeren Mengen der Mengeneffekt minimiert bzw. eliminiert, so dass bei gleicher Einstellung des Dosier- 3 und Verteilsystems 4, 5eine gleichmäßige Düngerverteilung über den gewünschten Arbeitbereich bei unterschiedlich großen ausgebrachten Mengen erreicht wird.

## Patentansprüche

1. Zweischeibenstreuer für Streugut mit einem Vorratsbehälter (1), der sich je zu einem Boden verjüngende Trichter (2) aufweist, je einer jedem Boden zugeordneten Dosiereinrichtung (3) mit einer Dosieröffnung (8) mit einem Dosierschieber (9) zur Einstellung des gewünschten Massenstromes und je einer darunter umlaufenden Verteilerscheibe (5) mit Wurfflügeln (4), die entgegen der Fahrtrichtung des Streuers von innen nach außen umlaufen und sich nicht vollständig überlappende Streufächer erzeugen, wobei durch den Schieber (9, 18) der freigebbare Querschnitt der Dosieröffnung (8) in veränderbarer Weise einstellbar ist, **dadurch gekennzeichnet, dass** die Kontur des Dosierschiebers (9, 18) derart gestaltet ist, dass bei kleinen Massenstrom mit einer Öffnungsfläche bis zu 10 % bis zu 25%, vorzugsweise etwa 18,5 % der Dosieröffnung (8) die gesamte in Drehrichtung der Wurfflügel (4) sich erstreckende Breite der Dosieröffnung (8) von dem Dosierschieber (9,18) freigegeben wird und ab einer Öffnungsfläche von mindestens 10 % bis zu 25%, vorzugsweise etwa 18,5 % der Dosieröffnung (8) zumindest ein Teilbereich (17) der Dosieröffnung (8) im Bereich dessen Öffnungsbeginnes (13) durch den Dosierschieber (9) wieder verschlossen wird.

2. Zweischeibenstreuer nach Anspruch 1, **dadurch gekennzeichnet, dass** der im Öffnungsbeginn (13) der Dosieröffnung (8) verschlossene Teilbereich (17) in dem der Drehrichtung (12) der Wurfflügel (4) abgewandten Bereich der Dosieröffnung (8) liegt.

3. Zweischeibenstreuer nach einem oder mehreren der vorstehenden Ansprüche, **dadurch gekennzeichnet, dass** die wieder verschlossen Breite der Dosieröffnung (8) mindestens ein Viertel bis ein Drittel der jeweiligen Breite der Dosieröffnung (8) beträgt.

4. Zweischeibenstreuer nach einem oder mehreren der vorstehenden Ansprüche, **dadurch gekennzeichnet, dass** der die Dosieröffnung (8) wieder verschließende Teil (18) des Dosierschiebers (9) plattenförmig ausgebildet und Teil des Dosierschiebers (9) ist.

## Claims

1. Two-disc spreader for granular material, having a hopper (1) which has a funnel (2) that narrows in each case to a base, in each case one metering device (3) that is assigned to each base and has a metering opening (8) having a metering slide (9) for setting the desired mass flow, and a distributor disc (5) that revolves under each metering device and has thrower blades (4) which revolve from the inside outwards counter to the direction of travel of the spreader and produce spreading fans that do not completely overlap, wherein the clearable cross section of the metering opening (8) is variably settable by the slide (9, 18), **characterized in that** the contour of the metering slide (9, 18) is configured such that in the case of a small mass flow having an opening area of up to 10% to 25%, preferably about 18.5%, of the metering opening (8), the entire width, extending in the direction of rotation of the thrower blades (4), of the metering opening (8) is cleared by the metering slide (9, 18), and starting from an opening area of at least 10% to 25%, preferably about 18.5%, of the metering opening (8), at least a part region (17) of the metering opening (8) is closed again by the metering slide (9) in the region of the beginning (13) of said opening.

2. Two-disc spreader according to Claim 1, **characterized in that** the part region (17) closed at the beginning (13) of the metering opening (8) is located **in that** region of the metering opening (8) that faces away from the direction of rotation (12) of the thrower blades (4).

3. Two-disc spreader according to one or more of the preceding claims, **characterized in that** the width that is closed again of the metering opening (8) makes up at least a quarter to a third of the respective width of the metering opening (8).

4. Two-disc spreader according to one or more of the preceding claims, **characterized in that** that part (18) of the metering slide (9) that closes the metering opening (8) again is formed in a plate-like manner and is part of the metering slide (9).

## Revendications

1. Épandeur à double disque pour un produit d'épandage, comprenant un réservoir de stockage (1) qui comprend des entonnoirs (2) se rétrécissant chacun en direction d'un fond, un dispositif de dosage respectif (3), associé à chaque fond, comprenant un orifice de dosage (8) et un tiroir doseur (9) pour le réglage du débit massique souhaité, et un disque distributeur respectif (5) tournant en dessous de ce dispositif de dosage et pourvu d'ailettes d'éjection (4) qui tournent de l'intérieur vers l'extérieur, en sens inverse à la direction d'avancement de l'épandeur, et produisent des zones d'épandage ne se chevauchant pas complètement, la section transversale de l'orifice de dosage (8) qui peut être dégagée pouvant être réglée de manière modifiable au moyen du tiroir (9, 18), **caractérisé en ce que** le contour du tiroir doseur (9, 18) est configuré de telle sorte qu'en cas de débit massique faible avec une surface d'ouverture de jusqu'à 10% à jusqu'à 25%, de préférence d'environ 18,5%, de l'orifice de dosage (8), la totalité de la largeur de l'orifice de dosage (8) s'étendant dans le sens de rotation des ailettes d'éjection (4) soit dégagée par le tiroir doseur (9, 18), et qu'à partir d'une surface d'ouverture d'au moins 10% jusqu'à 25%, de préférence d'environ 18,5%, de l'orifice de dosage (8), au moins une région partielle (17) de l'orifice de dosage (8) est à nouveau fermée par le tiroir doseur (9) dans la région du commencement de son orifice (13).

2. Épandeur à double disque selon la revendication 1, **caractérisé en ce que** la région partielle (17) fermée dans le commencement d'orifice (13) de l'orifice de dosage (8) se situe dans la région de l'orifice de dosage (8) opposée au sens de rotation (12) des ailettes d'éjection (4).

3. Épandeur à double disque selon l'une quelconque ou plusieurs des revendications précédentes, **caractérisé en ce que** la largeur à nouveau fermée de l'orifice de dosage (8) vaut au moins un quart jusqu'à un tiers de la largeur respective de l'orifice de dosage (8).

4. Épandeur à double disque selon l'une quelconque ou plusieurs des revendications précédentes, **caractérisé en ce que** la partie (18) du tiroir doseur (9) fermant à nouveau l'orifice de dosage (8) est réalisée en forme de plaque et fait partie du tiroir doseur (9).
